# EUROPEAN PATENT APPLICATION

(11) **EP 1 876 521 A2**
(43) Date of publication of application: **09.01.2008**
(21) Application number: 07111740.2
(22) Date of filing: 04.07.2007
(51) Int. Cl.: G06F 3/14

(54) **Apparatus and method for sharing video telephony screen in mobile communication terminal**

(30) Priority: 04.07.2006 KR 20060062349
(71) Applicant: Samsung Electronics Co., Ltd., Suwon-si, Gyeonggi-Do (KR)
(72) Inventor: You, Jin-Woo No. 101-702, Dongsung 2cha APT,, Gyeonggi-do (KR); Jeong, Wook-Hyun No. 107-1405, Hwanggol maeul 1 danji APT,, Gyeonggi-do (KR); Park, Jong-Cheul, Geonnam (KR)
(74) Representative: Zimmer, Franz-Josef

(57) **Abstract**

Provided is an apparatus and method for sharing a screen in video telephony in a mobile communication terminal. The method includes transmitting a screen share request signal to a connected terminal if an event occurs for screen share in the video telephony, and capturing an image displayed on the screen, and transmitting the captured image to the connected terminal, when receiving a screen share acceptance signal from the connected terminal.

## Description

### PRIORITY

This application claims priority under 35 U.S.C. § 119 to an application filed in the Korean Intellectual Property Office on July 4, 2006 and assigned Serial No. 2006-62349, the contents of which are incorporated herein by reference.

### BACKGROUND OF THE INVENTION

### 1. Field of the Invention

The present invention relates generally to an apparatus and method for sharing a video telephony screen in a mobile communication terminal, and in particular, to an apparatus and method for real-time sharing a screen, which is displayed on a display unit, with a connected party in video telephony.

### 2. Description of the Related Art

International Mobile Telecommunications (IMT)-2000 system, which is the third generation (3G) mobile communications system, refers to a system for enabling unspecified individuals to perform worldwide wireless telephony by a mobile phone, establishing a worldwide wireless telephony network. Asynchronous Wideband Code Division Multiple Access (WCDMA) mobile system based on a mobile communication network, such as IMT-2000 and Universal Mobile Telecommunication System (UMTS), is providing file and video service such as Internet and video telephony service as well as voice telephony to a user due to its capability for providing high-speed data transmission.

The video telephony service provides a general telephony function in which a sender terminal compresses and transmits a user's face to a receiver terminal, and decodes and displays a connected party's face received from the receiver terminal, thereby enabling real time face-to-face telephony.

The video telephony service does not provide a function in which a user transmits contents to the connected party in video telephony. Thus, the user incurs the inconvenience of having to stop the video telephony and then transmit a still image file using Multimedia Messaging Service (MMS), when intending to transmit contents such as a still image to the connected party in the video telephony. Accordingly, the video telephony service has a drawback that it is impossible to real-time share with the connected party the contents transmitted in video telephony, though currently providing a function of transmitting the contents in video telephony. Further, although the user transmits the contents to the connected party in video telephony, transmission itself may be meaningless if the connected party does not reproduce the contents.

Thus, a service for real-time sharing of the contents between an outgoing terminal and an incoming terminal in video telephony is required.

### SUMMARY OF THE INVENTION

An aspect of the present invention is to substantially solve at least the above problems and/or disadvantages and to provide at least the advantages below. Accordingly, an aspect of the present invention is to provide an apparatus and method for sharing a video telephony screen in a mobile communication terminal.

Another aspect of the present invention is to provide an apparatus and method for screen transmission, for sharing a video telephony screen in a mobile communication terminal.

The above aspects are achieved by providing an apparatus and method for sharing a video telephony screen in a mobile communication terminal.

According to the present invention, there is provided a method for sharing a screen in video telephony in a mobile communication terminal. The method includes transmitting a screen share request signal to a connected terminal if an event occurs for screen share in video telephony, and capturing an image displayed on the screen, and transmitting the captured image to the connected terminal, when receiving a screen share acceptance signal from the connected terminal.

According to the present invention, there is provided a method for sharing a screen in video telephony in a mobile communication terminal. The method includes displaying the screen share request on a display unit when receiving a screen share request from a connected terminal in video telephony, transmitting a screen share acceptance signal to the connected terminal when setting a screen share acceptance, decoding and reconstructing the encoded image depending on the map information, when receiving map information and an encoded image from the connected terminal, and displaying the reconstructed image in a position of the display unit.

According to the present invention, there is provided an apparatus for sharing a screen in video telephony in a mobile communication terminal. The apparatus includes a display unit for displaying an image, an image capture unit for, upon generation of a video telephony screen share event, generating split map information on a share region, capturing an image displayed on the display unit, and splitting the captured image depending on the split map information, an image processor for encoding the split image, and a communication module for transmitting the encoded image and the split map information to a connected terminal.

According to the present invention, there is provided an apparatus for sharing a screen in video telephony in a mobile communication terminal. The apparatus includes a communication module for receiving map information and an encoded image from a connected terminal, an image processor for decoding the encoded image depending on the map information, an image reconstruction unit for reconstructing the decoded image by an original image depending on the map information, and a display unit for displaying the reconstructed image in a predetermined region.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates architecture of a mobile communication terminal according to the present invention;
FIGs. 2A and 2B illustrate architecture of an image processor for encoding and decoding an image using a single buffer in a mobile communication terminal according to the present invention;
FIGs. 3A and 3B illustrate architecture of an image processor for encoding and decoding an image using a multi buffer in a mobile communication terminal according to the present invention;
FIG. 4 is a ladder diagram illustrating a procedure of sharing a screen in video telephony according to the present invention;
FIG. 5 is a flowchart illustrating a procedure of sharing, by a sender terminal, a video telephony screen in a mobile communication terminal according to the present invention;
FIG. 6 illustrates architecture of a screen region intended for sharing in video telephony in a mobile communication terminal according to the present invention; and
FIG. 7 is a flowchart illustrating a procedure of sharing, by a receiver terminal, a video telephony screen in a mobile communication terminal according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of clarity and conciseness.

The present invention provides an apparatus and method for real-time sharing an image displayed on a display unit with a connected party in video telephony in a mobile communication terminal. The mobile communication terminal refers to all terminals supporting video telephony.

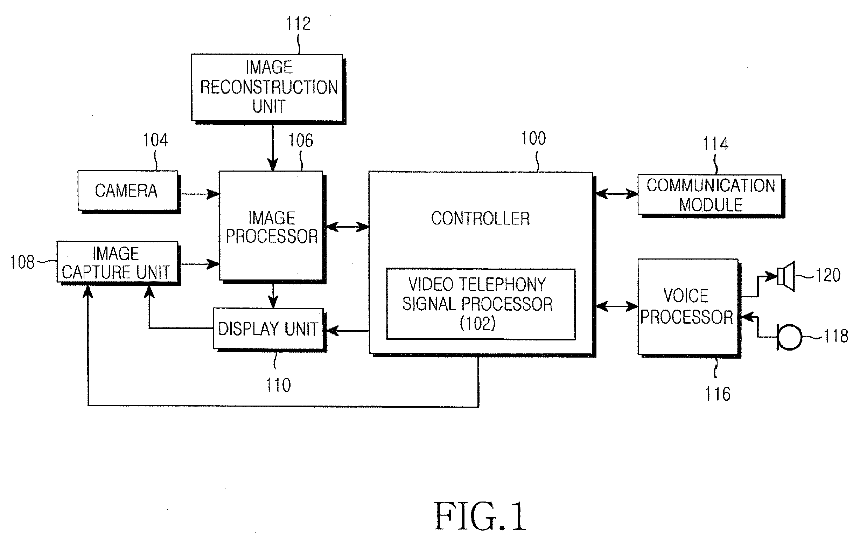

FIG. 1 illustrates architecture of a mobile communication terminal according to the present invention. The mobile communication terminal includes a controller 100, a video telephony signal processor 102, a camera 104, an image processor 106, an image capture unit 108, a display unit 110, an image reconstruction unit 112, a communication module 114, a voice processor 116, a microphone 118 and a speaker 120.

Referring to FIG. 1, the controller 100 performs processing and control for voice telephony and data communication. According to the present invention, the controller 100 transmits a screen share request signal to a connected terminal via the communication module 114 when there occurs a screen share event in the video telephony. The controller 100 outputs a screen share start notification signal to the image capture unit 108 when receiving a screen share acceptance signal from the connected terminal. After that, the controller 100 controls a function of transmitting an image encoded by the image processor 106 and map information on the encoded image, to the connected terminal. The controller 100 transmits a screen share acceptance or rejection signal based on user's key manipulation to the connected terminal, and outputs encoded image and map information received from the connected terminal to the image processor 106, when receiving a video telephony screen share request signal from the connected terminal. Also, the controller 100 includes the video telephony signal processor 102, and controls a signal exchanged with the connected terminal for the video telephony according to the present invention.

The camera 104 includes a camera sensor for sensing a light signal at the time of image photographing, and converting the sensed light signal into an electric signal, and a signal processor for converting an analog image signal photographed by the camera sensor, into digital data. The camera 104 outputs the converted digital data to the image processor 106.

The image processor 106 is connected an image COder-DECoder (CODEC) as well. The image processor 106 codes the image signal received from the camera 104 by a set coding method, or decodes coded frame image data into original frame image data. The image processor 106 processes the image signal received from the camera 104 by a frame unit. The image processor 106 outputs the processed image signal, adjusting to a feature and a size of the display unit 110. According to the present invention, the image processor 106 codes an image signal received from the image capture unit 108, and outputs the coded image signal to the controller 100. The image processor 106 decodes an image signal received from the controller 100, and outputs the decoded image signal to the image reconstruction unit 112.

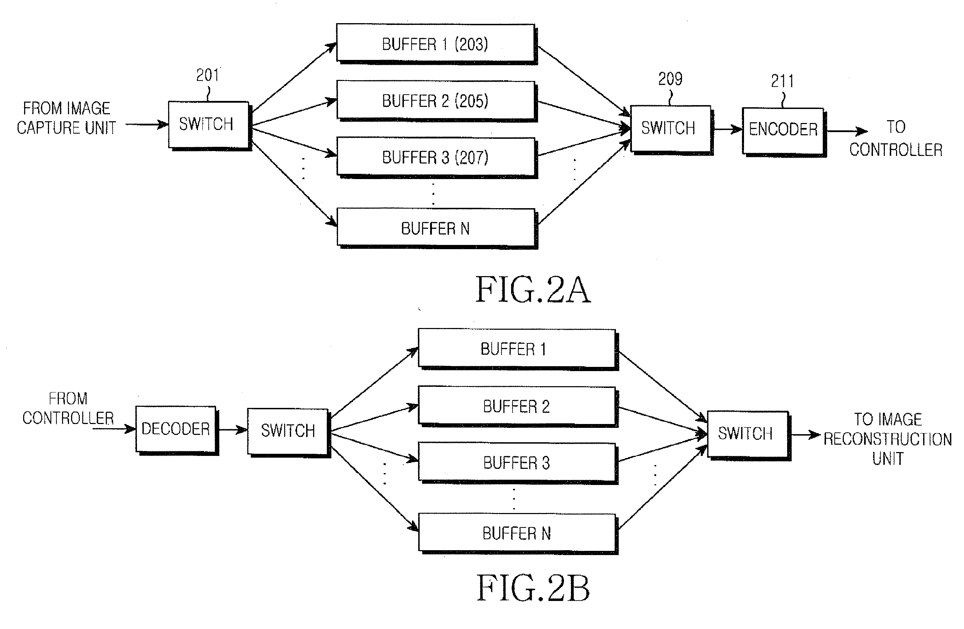

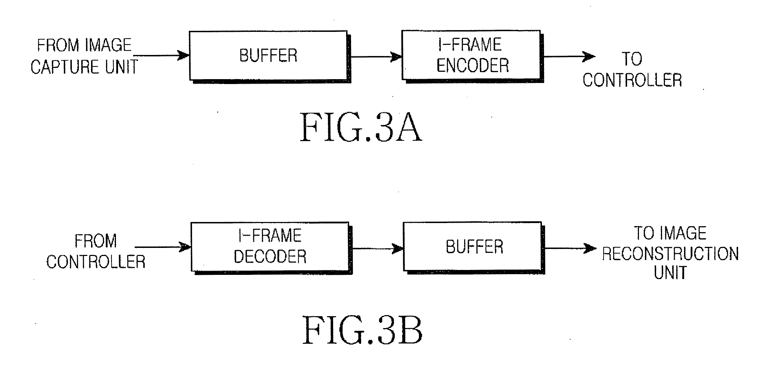

The image processor 106 can use a multi buffer shown in FIGs. 2A and 2B or can use a single buffer shown in FIGs. 3A and 3B in order to encode or decode the image signal. When using the multi buffer, the image processor 106 can share a screen with the connected terminal using all of an I-frame and a P-frame. The I-frame represents an independently decodable frame such as Joint Photograph Experts Group (JPEG). The P-frame represents a frame for predicting and compensating a motion between 1-frames.

When using the multi buffer, the image processor 106 stores the 1-frame and the P-frame in respective buffers via a first switch 201 depending on a construction sequence of split images, arranges the stored I-frame and P-frame in an original sequence via a second switch 209, and outputs the arranged I-frame and P-frame to an encoder 211, thereby encoding the I-frame and the P-frame as shown in FIG. 2A. The I-frame and the P-frame are alternately stored in the respective buffers depending on the construction sequence of the split images. In detail, the image processor 106 stores a split image having a first construction sequence in the I-frame in a first buffer 203, stores a split image having a first construction sequence in the P-frame in a second buffer 205, and stores a split image having a second construction sequence in the 1-frame in a third buffer 207. The image processor 106 requires the number of the multi buffers as twice the number of the split images and thus, limits the memory utilization. Thus, as shown in FIGs. 3A and 3B, the image processor 106 uses the single buffer using only an I-frame, thereby limiting the degree of memory utilization.

When receiving a screen share acceptance notification signal from the controller 100, the image capture unit 108 splits a region of the display unit 110 set by the user, by a preset constant size, and constructs map information on the split region. After that, the image capture unit 108 splits an image displayed in the region of the display unit 110 depending on the map information. The image capture unit 108 encodes and outputs the split image to the image processor 106. The constant size can use a Quarter Common Intermediate Format (QCIF) (176*144) supported in H.263 and Moving Picture Experts Group (MPEG)-4. The map information includes the number, a construction sequence and position information on the split regions.

The display unit 110 displays state information generated in operation of the mobile communication terminal, and the limited number of characters. Specifically, the display unit 110 displays a region of a screen sharing with the connected terminal, and displays the decoded image received from the image processor 106, in a region of a screen sharing with the connected terminal according to the present invention.

The image reconstruction unit 112 receives the decoded image and the map information from the image processor 106, reconstructs the decoded image by an original image depending on the map information, and outputs the reconstructed image to the display unit 110 via the image processor 106.

The communication module 114 transmits and receives a radio signal of data inputted and outputted through an antenna. For example, in a transmission mode, the communication module 114 converts a base band signal, which is obtained by channel-coding and spreading data to transmit, into a Radio Frequency (RF) signal. The communication module 114 transmits the converted base band signal through the antenna. In a reception mode, the communication module 114 receives and converts an RF signal into a base band signal, and despreads and channel-decodes the base band signal for data restoration.

The voice processor 116 is connected a voice CODEC as well. The voice processor 116 inputs and outputs a voice signal through the microphone 118 and the speaker 120. For example, the voice processor 116 receives Pulse Code Modulation (PCM) data from the controller 100, converts the PCM data into an analog voice signal, and transmits the converted analog voice signal through the speaker 120. The voice processor 116 receives a voice signal from the microphone 118, converts the received voice signal into PCM data, and transmits the converted PCM data to the controller 100.

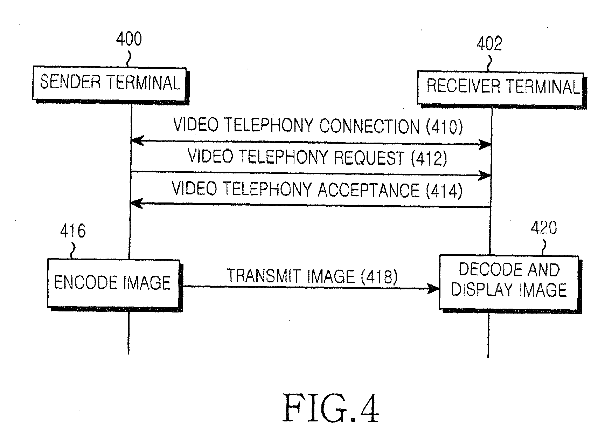

FIG. 4 is a ladder diagram illustrating a procedure of sharing the screen in the video telephony according to the present invention.

Referring to FIG. 4, the video telephony connects between the sender terminal 400 and the receiver terminal 402 in Step 410. In Step 412, the sender terminal 400 sends a video telephony screen share request to the receiver terminal 402 when there occurs an event for sharing a video telephony screen with the receiver terminal 402 in the sender terminal 400. In Step 414, the receiver terminal 402 sends a video telephony screen share acceptance to the sender terminal 400. If so, the sender terminal 400 captures, splits and encodes an image displayed on the display unit 110 in Step 416. In Step 418, the sender terminal 400 transmits the encoded image to the receiver terminal 402.

In Step 420, the receiver terminal 402 decodes and reconstructs the encoded image by an original image, and displays the reconstructed image on display unit 110.

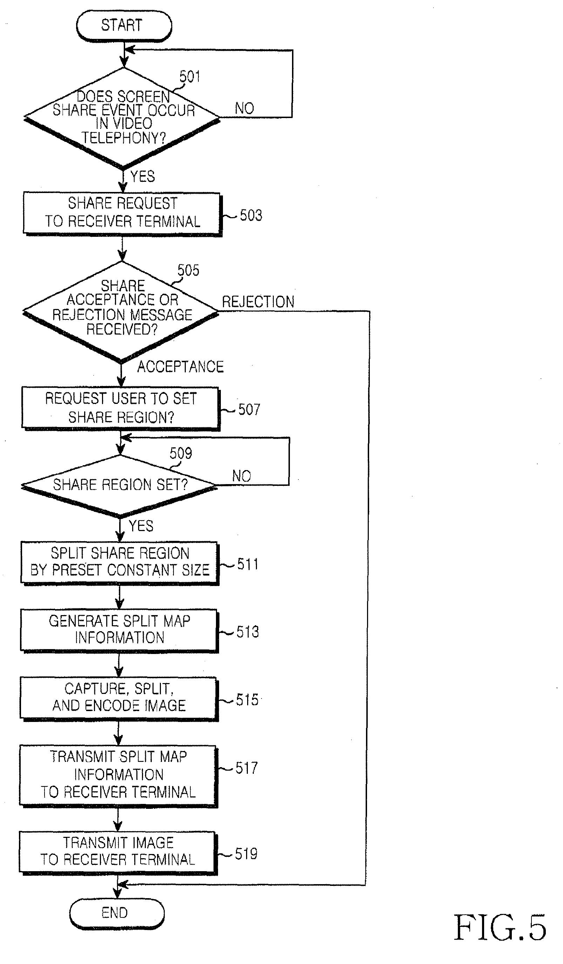

FIG. 5 is a flowchart illustrating a procedure of sharing, by the sender terminal, a video telephony screen in the mobile communication terminal according to the present invention.

Referring to FIG. 5, the sender terminal checks if an event occurs for sharing a video telephony screen in video telephony in Step 501. When there occurs the screen share event, the sender terminal transmits a screen share request signal to the receiver terminal in Step 503. If no screen share event occurs, then Step 501 is repeated.

In Step 505, the sender terminal checks whether it receives a screen share acceptance or rejection message from the receiver terminal. When receiving the screen share rejection message from the receiver terminal, the sender terminal terminates the algorithm according to the present invention. When receiving the screen share acceptance message from the receiver terminal to the contrary, the sender terminal requests a user to set the screen region intended for sharing with the connected party in the video telephony in Step 507.

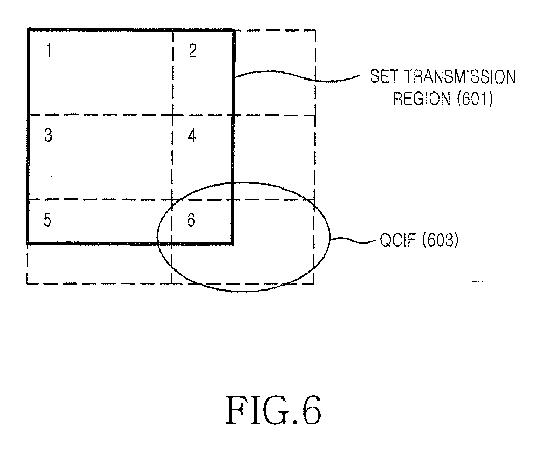

In Step 509, the sender terminal checks whether the user sets the screen region intended for sharing with the connected party in the video telephony. In Step 511, the sender terminal splits the set share region by a constant size when checking that the user sets the screen region intended for sharing with the connected party. In Step 513, the sender terminal generates split map information representing information on the split region. The constant size can use the QCIF (176*144) supported in H.263 and MPEG-4. The map information includes the number of the set regions, a construction sequence of the set regions and position information on the set regions. For example, the split map information can be generated by splitting a transmission region 601 set by the user, by a QCIF size 603, and setting a sequence of the split regions, as shown in FIG. 6.

In Step 515, the sender terminal captures and splits the image displayed in a region of the display unit 110, and encodes the split image in the sequence of the split regions included in the generated split map information. For capturing the set transmission region, a total frame per second value is equal to 15 fps as recommended in H.324M. In other words, the frame per second value is decided such that a product of the number of the split images of the transmission region and the frame per second value for capturing each image is less than or equal to 15 fps (that is, number of split images x frame per second ≤ 15 fps). For example, the frame per second value of each split region can be equal to 3 fps when the screen region selected by the user is split by four QCIFs.

In Step 517, the sender terminal transmits the split map information to the receiver terminal. In Step 519, the sender terminal transmits the image, which is encoded using sequence information on the split region among the split map information, to the receiver terminal over a video channel for video telephony. After that, the sender terminal terminates the algorithm.

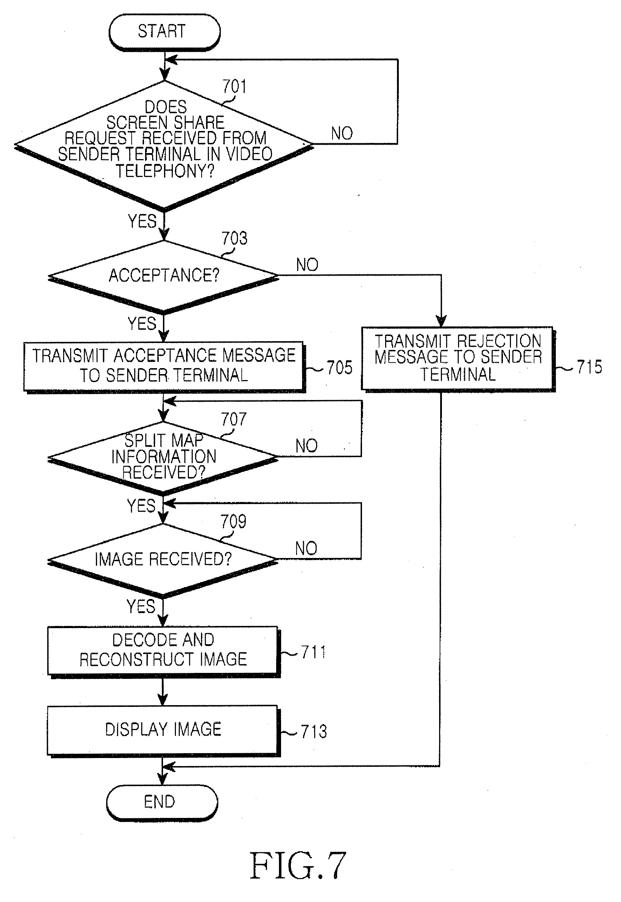

FIG. 7 is a flowchart illustrating a procedure of sharing, by the receiver terminal, a video telephony screen in the mobile communication terminal according to the present invention.

Referring to FIG. 7, in Step 701, the receiver terminal checks whether it receives a video telephony screen share request from the sender terminal in video telephony. In Step 703, when receiving the screen share request, the receiver terminal displays a screen share request notification message on a display unit 110, and checks whether a user sets a screen share acceptance or rejection. In Step 715, the receiver terminal transmits a screen share rejection notification message to the sender terminal in video telephony when the user sets the screen share rejection. After that, the receiver terminal terminates the algorithm.

In Step 705, the receiver terminal transmits a screen share acceptance notification message to the sender terminal in video telephony when the user sets the screen share acceptance. In Step 707, the receiver terminal checks whether it receives the split map information from the sender terminal. The split map information includes the number of split capture images, a construction sequence of the split images and position information on the split images.

In Step 709, the receiver terminal checks whether it receives the encoded image from the sender terminal when receiving the split map information.

In Step 711, the receiver terminal decodes the received image depending on the received split map information when receiving the encoded image. In Step 713, the receiver terminal displays the decoded image in a region of a display unit 110.

As described above, the present invention can share the video telephony screen with the connected party in video telephony in the mobile communication terminal, thereby sharing the same contents with the connected party simultaneously, and providing a conference effect. The present invention can reproduce the contents by its own terminal without separate transmission, and real-time share the contents with the connected party in video telephony.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for sharing a screen in video telephony in a mobile communication terminal, the method comprising:
transmitting a screen share request signal to a connected terminal if an event for screen share occurs in the video telephony; and
capturing an image displayed on the screen, and transmitting the captured image to the connected terminal, when receiving a screen share acceptance signal from the connected terminal.

2. The method of claim 1, wherein the capturing and transmitting of the image further comprises:
displaying a screen share region set request on a display unit;
splitting the set region by a constant size when setting a share region of the screen;
generating map information on the split region;
capturing an image displayed in the set region, and splitting and encoding the captured image depending on the map information; and
transmitting the map information and the encoded image to the connected terminal.

3. The method of claim 2, wherein the constant size is based on a Quarter Common Intermediate Format (QCIF) supported in H.263 or Moving Picture Experts Group (MPEG)-4.

4. The method of claim 2, wherein the map information includes at least one of a number of the screen regions split by the constant size, a construction sequence of the split regions and position information on the split regions.

5. The method of claim 2, wherein a frame per second of the split image is an integer that is less than or equal to a quotient obtained by dividing fifteen frames per second recommended in H.324M by a number of the split images.

6. A method for sharing a screen in video telephony in a mobile communication terminal, the method comprising:
displaying the screen share request on a display unit when receiving a screen share request from a connected terminal in the video telephony;
transmitting a screen share acceptance signal to the connected terminal when setting a screen share acceptance;
decoding and reconstructing the encoded image depending on the map information, when receiving map information and an encoded image from the connected terminal; and
displaying the reconstructed image in a position of the display unit.

7. The method of claim 6, wherein the map information includes at least one of a number of split images, a construction sequence of the split images and position information on the split images.

8. An apparatus for sharing a screen in video telephony in a mobile communication terminal, the apparatus comprising:
a display unit (110) for displaying an image;
an image capture unit (108) for, upon generation of a video telephony screen share event, generating split map information on a share region, capturing an image displayed on the display unit, and splitting the captured image depending on the split map information;
an image processor (106) for encoding the split image; and
a communication module (114) for transmitting the encoded image and the split map information to a connected terminal.

9. The apparatus of claim 8, wherein the split map information includes at least one of a number of split screen regions set by a user, a construction sequence of the split screen regions and position information on the split screen regions.

10. The apparatus of claim 8, wherein the image processor (106) includes a single buffer, and stores an Independently decodable (I)-frame in the single buffer.

11. The apparatus of claim 8, wherein the image processor (106) includes a multi buffer, and stores an Independently decodable (I)-frame and a (P)-frame for Predicting and compensating a motion between I-frames, in corresponding buffers.

12. The apparatus of claim 11, wherein the I-frame and the P-frame are alternately stored in the corresponding buffers depending on a construction sequence of the split images.

13. An apparatus for sharing a screen in video telephony in a mobile communication terminal, the apparatus comprising:
a communication module (114) for receiving map information and an encoded image from a connected terminal;
an image processor (106) for decoding the encoded image depending on the map information;
an image reconstruction unit (112) for reconstructing the decoded image by an original image depending on the map information; and
a display unit (110) for displaying the reconstructed image in a set region.

14. The apparatus of claim 13, wherein the map information includes at least one of a number of split captured images, a construction sequence of the split images and position information on the split images.

15. The apparatus of claim 13, wherein the image processor (106) includes a single buffer, and stores an Independently decodable (I)-frame in the single buffer.

16. The apparatus of claim 13, wherein the image processor (106) includes a multi buffer, and stores an Independently decodable (I)-frame and a (P)-frame for Predicting and compensating a motion between I-frames, in corresponding buffers.

17. The apparatus of claim 16, wherein the 1-frame and the P-frame are alternately stored in the corresponding buffers depending on a construction sequence of split images.

18. An apparatus for sharing a screen in video telephony in a mobile communication terminal comprising:
means for transmitting a screen share request signal to a connected terminal; and
means for receiving a screen share acceptance signal from the connected terminal; and
means for transmitting a displayed image to the connected terminal.

19. The apparatus of claim 18, wherein the means for transmitting the displayed image is adapted to perform the steps of:
splitting a screen share region by a constant size;
generating map information on the split region;
capturing an image displayed in the screen share region, and encoding the captured image depending on the map information; and
transmitting the map information and the encoded image to the connected terminal.

20. An apparatus for sharing a screen in video telephony in a mobile communication terminal comprising:
means for transmitting a screen share acceptance signal to the connected terminal;
means for decoding and reconstructing an encoded image depending on a map information, when receiving the map information and the encoded image from the connected terminal; and
means for displaying the reconstructed image.
